# EUROPEAN PATENT SPECIFICATION

(11) **EP 1 043 136 B1**
(45) Date of publication and mention of the grant of the patent: **11.02.2004**
(21) Application number: 00302521.0
(22) Date of filing: 28.03.2000
(51) Int. Cl.: B29C 35/00

(54) **Vulcanisation mould for the manufacture of technical rubber products**
Vulkanisierform zur Herstellung von technischen Gegenstanden aus Gummi
Moule de vulcanisation destiné à la fabrication d'objects techniques en caoutchouc

(30) Priority: 29.03.1999 DE 19914215
(43) Date of publication of application: 11.10.2000
(73) Proprietor: Dunlop GmbH & Co. KG, 63450 Hanau (DE)
(72) Inventor: Nitsch, Boris, 63755 Alzenau (DE); Serener-Thielmann, Tayfun, 65203 Wiesbaden (DE)
(74) Representative: Kutsch, Bernd

(56) References cited:
- DE-A- 1 965 121
- DE-A- 4 002 708
- DE-A- 4 341 683

## Description

The invention relates to a vulcanisation mould for the manufacture of technical rubber products, in particular for the manufacture of vehicle tyres, comprising a plurality of vent openings which lead from the inner space of the mould to the atmosphere which can be closed during the vulcanisation process by contact with blank material.

The purpose of the vent openings, of which several thousand can be provided in a vulcanisation mould, is to ensure a problem-free venting of all regions of the vulcanisation mould provided with tread pattern forming projections and lamellae in order to ensure that the tyre blank can precisely contact the shape-giving tools, i.e. projections and lamellae of the vulcanisation mould, during the inflation and shaping process and that such precise contact against the mould is not prevented by air inclusions.

An undesired disadvantage of the known vent holes or bores lies in the fact that rubber penetrates into these bores, which normally have a diameter of 0.5 to 2.0 mm, and the shoots which are formed give the finished tyre a brush-like or hedgehog-like appearance.

In order to avoid the undesired shoots, it is known to insert valves into the vent bores which are closed by the approaching surface of the blank and which open again on demoulding. The disadvantage of the valves of this kind previously used in tyre vulcanisation moulds lies above all in the fact that they are complicated as a result of their multi-part design and that a spiral spring is required to ensure a defined closing and opening process and must have, as far as possible, the same characteristic for the many valves that are required. The extremely small dimensions of these valves make it difficult to ensure practically identical characteristics.

For the avoidance of these disadvantages it has in particular already been proposed, in the non-prior published German patent application 199 00 596, to mould a respective blocking member in the vent bores which at least substantially blocks the penetration of blank material and which comprises a central body which can be fixed in force-transmitting manner in the respective vent bore as well as a sealing part connected to the central body and having, at the inner side of the mould, a surface region disposed substantially flush with the mould and provided with at least one aperture, with the sealing part forming, together with the mould side end face of the central body, at least one flow path for the air which is pronouncedly angled following the aperture.

Through this special design of the blocking member it is possible to stop the blank material, which hits the blocking member, without any movable elements, solely on the basis of the guidance of the air flow and to prevent any form of disturbing penetration of blank material into the air discharge passages which are formed, which could lead to shoots on the finished product. This in turn has the consequence that during opening of the mould no rubber material can remain in the specially shaped air discharge passages and block them.

Another proposal in DE 4341683 provides a mould having an internal surface having air exit channels consisting of a large number of micro channels. Such a construction provides a moulding surface having a granular structure where the micro channels take away air. Such a construction does not give a smooth surface to the finished tread pattern.

The object of the present invention is to provide a further variant and improvement of a mould vent without movable elements, which is particularly economic to realise and which above all ensures an ideal venting in tyre moulds equipped with a plurality of lamellae.

According to the present invention this object is satisfied by the mould as set out in Claim 1. Further aspects of the invention are in the subclaims.

Through this design lamellae arise with a double function, namely lamellae which, in addition to their actual shape-giving function, also take on the function of the venting of the mould. The air compressed during the vulcanisation process by the blank material approaching the mould wall, and thus also the lamellae, passes through the slots into the gap between the wall parts of the lamellae and then escapes through the transverse bores provided in the mould material. It is important that the movement of the blank material or rubber material is blocked by the part wall of the lamellae laying opposite to their respective air entry slot and thus that no disturbing shoots can arise. As a result of the low wall thickness of the part walls of the lamellae, markings which are hardly visible in practice arise at the finished product and no problems arise during demoulding, since no rubber material remains in the slots and thus these very small slots for air discharge always remain free for subsequent vulcanisation processes.

In addition to the venting via the lamellae, further venting units can naturally also be provided in the respective mould, in particular in the lamellae-free regions of the mould, with the venting system in accordance with German patent application 199 00 596 preferably being used.

The lamellae are preferably formed as folded double-wall lamellae, with the folded edge of these double-wall lamellae preferably forming the edge of the lamellae at the inner side of the mould. Through the folding process the lamellae which are inserted into the mould receive the correct thickness for the respective purpose of use, with the intermediate wall gap required for the venting being formed by the folding and this gap also fully satisfying its function when the part walls of the lamellae practically lie directly in contact with one another, since in this case also an adequate flow cross-section is always available as a result of the areal nature of the gap.

Through the folded edge of the double-wall lamellae, the additional advantage arises that sharp-edged transitions are avoided in the finished tyre and rounded transitions can be obtained at the base of the narrow slits. This leads, in particular with blocks of a tread which has many slits, to an improvement, because the danger of notch crack formation at the base as almost completely precluded.

A further substantial advantage of the invention lies in the fact that vent slits can in particular be provided in lamellae regions in which the lamellae have a small radius of curvature. In these regions it is particularly difficult to ensure complete venting, which frequently leads to a nonuniform appearance of the lamellae slits in the finished tyre, i.e. lamellae slits of different width are visible. Since precisely these critical regions of small radius of curvature can be vented in problem-free manner by appropriate positioning of the vent slits in the lamella walls, a very uniform appearance of the lamella slits in the finished tyre can be achieved through the use of lamellae formed in accordance with the invention, as a result of the full venting of these critical regions which can be achieved.

The intermediate wall gap between the opposite lamella walls formed by folds can be precisely defined in accordance with a preferred embodiment of the invention in such a way that beads are introduced or pressed into the lamella walls, so that each such bead comes into contact with the wall opposite to it and thus the intermediate wall gap can be precisely defined, and indeed with the desired minimum dimensions.

A plurality of transverse bores is preferably provided in each mould segment which intersect with the double-wall lamellae and extend up to the respective end face of the segment, with the gap between adjacent segment end faces being sufficient for the air discharge. Instead of transverse bores, or in addition to transverse bores, bores can also be used which are introduced from the rear side of the mould or mould segments and which, in the same manner as the transverse bores, intersect the double-wall lamellae and thus form air discharge channels. Instead of bores which are subsequently introduced, corresponding channels can also already be formed during the casting of the mould.

Embodiments of the invention will now be described by way of example in conjunction with the following drawings, in which
- Figure 1: is a perspective illustration of a segment of a tyre mould with lamellae formed in accordance with the invention;
- Figure 2: is an enlarged representation of the region of the lamellae of the segment of Figure 1;
- Figure 3: is a detailed view of a region of the lamellae in a mould; and
- Figure 4: is a perspective illustration of a double-walled lamella prior to its installation or integration into a mould.

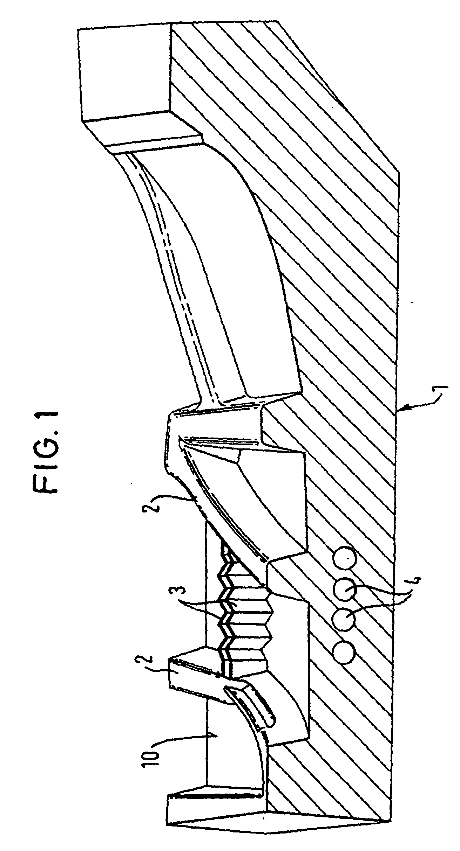

Figure 1 shows a section, i.e. a segment 1 of a tyre mould having a plurality of webs or projections 2 corresponding to the grooves or channels to be formed in the tyre tread pattern, and also with two corrugated lamellae 3, which extend substantially parallel tc one another, which serve for the formation of fine slits or sipes in the tyre tread pattern and which extend between two spaced apart projections 2. These lamellae 3 are let into the material of the mould segment and project beyond the inner wall 10 of the mould, for example by about half their total height. Transverse bores 4 formed in the mould segment 1 intersect and/or pass through the part of the lamellae 3 embedded in the mould material.

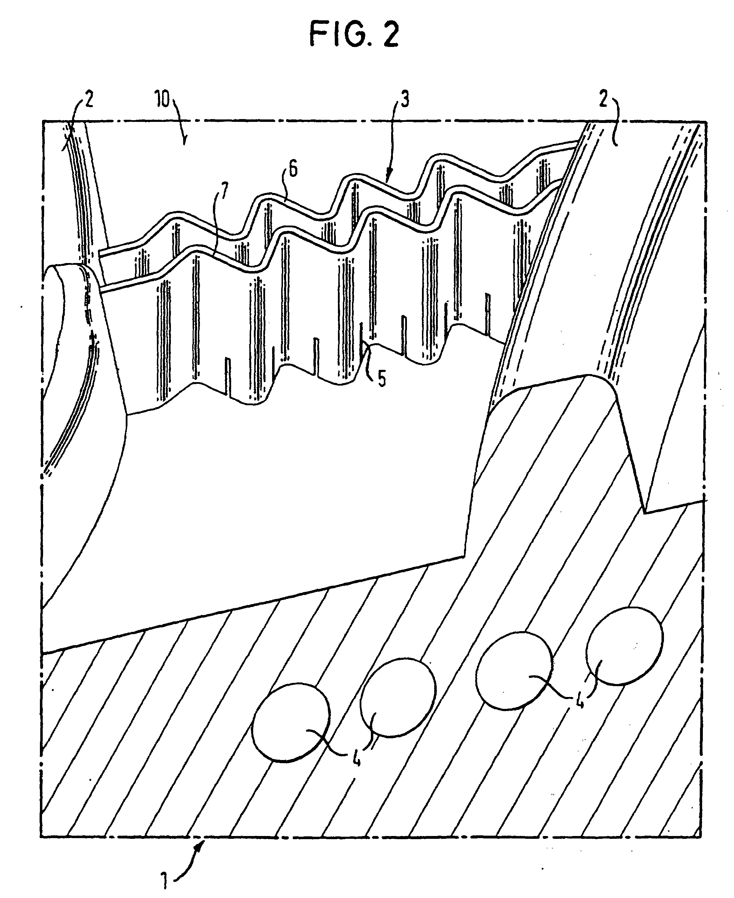

The enlarged representation of Figure 2 enables the design of the fine venting slits 5 in the double-walled lamellae 3 to be seen. These venting slits 5 extend, starting from the inner wall 10 of the mould, either upwardly over only a part or fraction of the total height of the lamellae 3, or also up to and into the vicinity of the folded edge.

The lamellae 3 are formed in this embodiment as folded, double-wall lamellae, with the folded edge 6 forming the end edge of the lamellae, i.e. the exposed edge thereof. Opposite to the slits 5 formed in each case in one of the two walls of the double-wall lamellae, there is a closed wall region in the other respective wall, so that the rubber material, as a result of the abrupt deflection of the air discharge path, can only enter into the slits 5, but cannot migrate further. Since the material thickness of the walls of the double-wall lamellae 3 is very small, and as a rule does not attain one millimetre, practically no recognisable markings arise at the finished tyre in the region of these slits 3, and never any form of disturbing shoots. During demoulding these very small projections which project into the slits can be removed without problem from the slits, so that these slits always remain free.

The air which escapes via the slits 5, when blank material approaches the inner wall of the mould, passes via the extremely narrow intermediate space between the two walls of the lamellae 3 to the transverse bores 4 and can escape via these transverse bores 4.

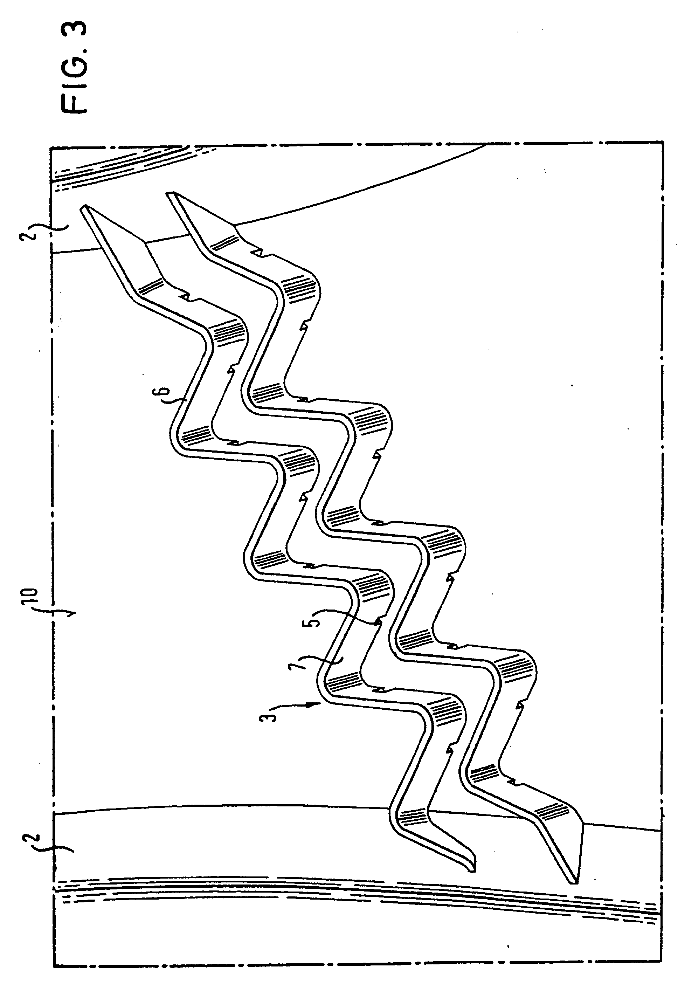

Figure 3 shows a perspective view of an arrangement of two corrugated lamellae 3 extending between two projections 2, which are formed as folded double-wall lamellae and provided with air discharge slits 5. The width of the slits 5 lies in the range from about 0.05 mm to 1 mm, and the height of the slits from the inner wall 10 of the mould onwards lies either in a comparable order of magnitude, or in the region of 1 to 2 mm, or provisions is made for these slits to extend up to and into the vicinity of the folded edge.

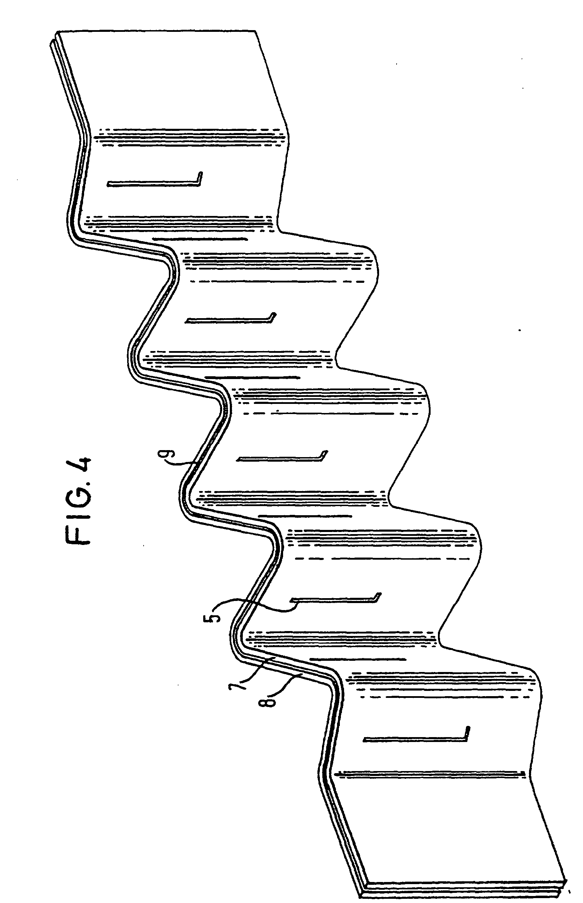

Figure 4 shows, for the purpose of explanation, a double-wall lamella in accordance with the invention prior to its insertion or integration into the mould. The intermediate wall gap 9, which is formed between the two lamella walls 7,8, can be recognised in this illustration; furthermore it can be seen that the slits 5 extend over a substantial part of the total height of the lamellae. However, only the part projection beyond the mould in the wall 10 remains as the actually active vent slit after the integration of the respective lamellae into the mould. Since the lower section of the respective lamellae 3 located in the mould material has transverse bores passing through it, it is always ensured that the air which passes via the slit 5 into the intermediate wall gap 9 can be led away without problems and unhindered.

## Claims

1. A vulcanisation mould for the manufacture of technical rubber products, in particular for the manufacture of vehicle tyres comprising a plurality of vent openings, which lead from the inner space of the mould (1) to the atmosphere which can be closed during the vulcanisation process by contact with blank material, **characterised in that** at least a part of the vent openings is provided through lamella (3) which are inserted into the mould (1) the lamella (3) being double-walled so as to have an intermediate wall gap (9), and having mutually displaced venting slits (5) in the lamella walls (7,8) at the mould wall side which communicate with the atmosphere via said intermediate wall gap (9) and a bore (4) provided in the mould.

2. A vulcanisation mould in accordance with claim 1, **characterised in that** the venting slits (5) provided in the lamella walls (7,8) are designed in the form of narrow slits which extend, starting from the inner wall (10) of the mould, over a predeterminable distance into the interior space of the mould.

3. A vulcanisation mould in accordance with claim 2, **characterised in that** the width of the slits (5) lies in the range from 0.05 mm to 1 mm, and **in that** the height of the slits extending into the inner space of the mould is at least 1 to 2 mm.

4. A vulcanisation mould in accordance with any of the preceding claims, **characterised in that** a closed wall region lies opposite to each slit (5) provided in a wall (7,8) of the multi-walled lamella (3).

5. A vulcanisation mould in accordance with any of the preceding claims, **characterised in that** the lamella (3) are formed as folded double-wall lamella.

6. A vulcanisation mould in accordance with claim 5, **characterised in that** the folded edge (6) of the double-wall lamella forms an end edge of the lamella at the inner side of the mould.

7. A vulcanisation mould in accordance with any of the preceding claims, **characterised in that** the width of the double-walled lamella (3) lies approximately in the range from 0.25 mm to 2 mm.

8. A vulcanisation mould in accordance with any of the preceding claims, **characterised in that** each lamella (3) consists of at least two walls which are connected together over a small area.

9. A vulcanisation mould in accordance with any of the preceding claims, **characterised in that** venting slits (5) are disposed in regions of the lamella with a low radius of curvature.

10. A vulcanisation mould in accordance with any of the preceding claims, **characterised in that** the intermediate wall gap (9) of the double-wall lamellae is preset in a defined manner by spacer elements.

11. A vulcanisation mould in accordance with claim 10, **characterised in that** the spacer elements are formed by beads impressed into the walls (7,8).

12. A vulcanisation mould in accordance with claim 11, **characterised in that** the beads are arranged adjacent to the venting slits (5).

13. A vulcanisation mould in accordance with any of the preceding claims, **characterised in that** the bores which intersect the double-wall lamella (3) are introduced at least in part from the rear side of the mould.

## Patentansprüche

1. Vulkanisationsform zur Herstellung technischer Gummiprodukte, insbesondere zur Herstellung von Fahrzeugreifen, mit einer Vielzahl von Entlüftungsöffnungen, die vom Innenraum der Form (1) zur Atmosphäre führen und beim Vulkanisationsvorgang durch zur Anlage kommendes Rohlingsmaterial verschlossen werden können, **dadurch gekennzeichnet, dass** wenigstens ein Teil der Entlüftungsöffnungen durch in die Form (1) eingesetzte Lamellen (3) vorgesehen ist, wobei die Lamellen (3) derart doppelwandig ausgebildet sind, dass sie einen Zwischenwandspalt (9) aufweisen, und formwandseitig in den Lamellenwänden (7, 8) gegeneinander versetzte Entlüftungsschlitze (5) aufweisen, die über den Zwischenwandspalt (9) und eine in der Form (1) vorgesehene Bohrung (4) mit der Atmosphäre in Verbindung stehen.

2. Vulkanisationsform nach Anspruch 1, **dadurch gekennzeichnet, dass** die in den Lamellenwänden (7, 8) vorgesehenen Entlüftungsschlitze (5) in Form von schmalen Schlitzen vorliegen, die sich ausgehend von der Forminnenwand (10) über eine vorgebbare Distanz in den Forminnenraum erstrecken.

3. Vulkanissationsform nach Anspruch 2, **dadurch gekennzeichnet, dass** die Breite der Schlitze (5) im Bereich von etwa 0,05 mm bis 1 mm gelegen ist, und dass die Höhe der sich in den Forminnenraum erstreckenden Schlitze (5) zumindest 1 bis 2 mm beträgt.

4. Vulkanisationsform nach einem der vorhergehenden Ansprüche, **dadurch gekennzeichnet, dass** jedem in einer Wandung (7, 8) der mehrwandigen Lamelle (3) vorgesehenen Schlitz (5) ein geschlossener Wandungsbereich gegenüberliegt.

5. Vulkanisationsform nach einem der vorhergehenden Ansprüche, **dadurch gekennzeichnet, dass** die Lamellen (3) als gefaltete Doppelwandlamellen ausgebildet sind.

6. Vulkanisationsform nach Anspruch 5, **dadurch gekennzeichnet, dass** die Faltkante (6) der Doppelwandlamellen die forminnenseitige Lamellen-Stirnkante bildet.

7. Vulkanisationsform nach einem der vorhergehenden Ansprüche, **dadurch gekennzeichnet, dass** die Dicke der doppelwandigen Lamellen (3) etwa im Bereich von 0,25 mm bis 2 mm gelegen ist.

8. Vulkanisationsform nach einem der vorhergehenden Ansprüche, **dadurch gekennzeichnet, dass** jede Lamelle (3) aus zumindest zwei kleinflächig miteinander verbundenen Wänden besteht.

9. Vulkanisationsform nach einem der vorhergehenden Ansprüche, **dadurch gekennzeichnet, dass** Entlüftungsschlitze (5) in den Lamellenbereichen mit geringem Krümmungsradius gelegen sind.

10. Vulkanisationsform nach einem der vorhergehenden Ansprüche, **dadurch gekennzeichnet, dass** der Zwischenwandspalt (9) der Doppelwandlamellen definiert durch Distanzelemente vorgegeben ist.

11. Vulkanisationsform nach Anspruch 10, **dadurch gekennzeichnet, dass** die Distanzelemente durch in die Wandungen (7, 8) eingedrückte Sicken gebildet sind.

12. Vulkanisationsform nach Anspruch 11, **dadurch gekennzeichnet, dass** die Sicken den Entlüftungsschlitzen (5) benachbart angeordnet sind.

13. Vulkanisationsform nach einem der vorhergehenden Ansprüche, **dadurch gekennzeichnet, dass** die die Doppelwandlamellen (3) schneidenden Bohrungen zumindest zum Teil von der Rückseite der Form her eingebracht sind.

## Revendications

1. Moule de vulcanisation pour la fabrication de produits techniques en caoutchouc, en particulier pour la fabrication de bandages pneumatiques pour véhicules, comprenant plusieurs ouvertures d'évacuation menant de l'espace interne du moule (1) à l'atmosphère, qui peuvent être fermées au cours du processus de vulcanisation par contact avec une matière d'ébauche, **caractérisé en ce qu'**au moins une partie des ouvertures d'évacuation est fournie par des lamelles (3) qui sont insérés dans le moule (1), les lamelles (3) étant équipées d'une double paroi de façon à posséder un espace libre intermédiaire (9) entre les parois, et possédant des fentes d'aération (5) disposées face à face pratiquées dans les parois (7, 8) des lamelles sur le côté de la paroi du moule, qui communiquent avec l'atmosphère, ledit espace intermédiaire (9) entre les parois et un alésage (4) pratiqué dans le moule.

2. Moule de vulcanisation selon la revendication 1, **caractérisé en ce que** les fentes d'aération (5), prévues dans les parois (7, 8) des lamelles, se présentent sous la forme de fentes étroites qui s'étendent, à partir de la paroi interne (10) du moule, sur une distance qui peut être prédéterminée, jusque dans l'espace interne du moule.

3. Moule de vulcanisation selon la revendication 2, **caractérisé en ce que** la largeur des fentes (5) se situe dans la plage de 0,05 mm à 1 mm, et **en ce que** la hauteur de fentes s'étendant jusque dans l'espace interne du moule, s'élève à une valeur d'au moins 1 à 2 mm.

4. Moule de vulcanisation selon l'une quelconque des revendications précédentes, **caractérisé en ce qu'**une région correspondant à une paroi fermée est disposée face à chaque fente (5) pratiquée dans une paroi (7, 8) des lamelles (3) à parois multiples.

5. Moule de vulcanisation selon l'une quelconque des revendications précédentes, **caractérisé en ce que** les lamelles (3) sont réalisées sous la forme de lamelles pliées à double paroi.

6. Moule de vulcanisation selon la revendication 5, **caractérisé en ce que** le bord plié (6) des lamelles à double paroi forme un bord final des lamelles sur le côté interne du moule.

7. Moule de vulcanisation selon l'une quelconque des revendications précédentes, **caractérisé en ce que** la largeur des lamelles à double paroi (3) se situe approximativement dans la plage de 0,25 mm à 2 mm.

8. Moule de vulcanisation selon l'une quelconque des revendications précédentes, **caractérisé en ce que** chaque lamelle (3) est constituée par au moins deux parois qui sont reliées l'une à l'autre sur une petite surface.

9. Moule de vulcanisation selon l'une quelconque des revendications précédentes, **caractérisé en ce que** des fentes d'aération (5) sont disposées dans les régions des lamelles possédant un faible rayon de courbure.

10. Moule de vulcanisation selon l'une quelconque des revendications précédentes, **caractérisé en ce que** l'espace libre intermédiaire (9) entre les parois des lamelles à double paroi est préréglé d'une manière définie par des éléments d'espacement.

11. Moule de vulcanisation selon la revendication 10, **caractérisé en ce que** les éléments d'espacement sont formés par des nervures imprimées dans les parois (7, 8).

12. Moule de vulcanisation selon la revendication 11, **caractérisé en ce que** les nervures sont arrangées en position adjacente aux fentes d'aération (5).

13. Moule de vulcanisation selon l'une quelconque des revendications précédentes, **caractérisé en ce que** des alésages qui coupent les lamelles (3) à double paroi sont introduits au moins en partie à partir du côté arrière du moule.
